# EUROPÄISCHE PATENTSCHRIFT

(11) **EP 1 834 696 B1**
(45) Veröffentlichungstag und Bekanntmachung des Hinweises auf die Patenterteilung: **20.02.2013**
(21) Anmeldenummer: 06111117.5
(22) Anmeldetag: 14.03.2006
(51) Int. Cl.: B01L 3/00, G01N 35/00

(54) **Verfahren zur Herstellung eines mehrschichtigen Analyseelements**
Method for producing a multi-layer analysis element
Procédé pour la fabrication d'un élément d'analyse multicouche

(43) Veröffentlichungstag der Anmeldung: 19.09.2007
(73) Patentinhaber: F. Hoffmann-La Roche AG, 4070 Basel (CH); Roche Diagnostics GmbH, 68305 Mannheim (DE)
(72) Erfinder: Roeper, Josef, Dr., 67141 Neuhofen (DE); Finke, Werner, Dr., 64683 Einhausen (DE)
(74) Vertreter: Stößel, Matthias

(56) Entgegenhaltungen:
- EP-A- 0 558 164
- WO-A-02/29853
- DE-A1-102005 022 022
- US-B1- 6 388 231

## Beschreibung

Die Erfindung bezieht sich auf ein mehrschichtiges Analyseelement und ein Verfahren zu dessen Herstellung, bei dem zum Schneiden Laserstrahlung zum Einsatz kommt.

Zur Analyse von Flüssigproben, beispielsweise Körperflüssigkeiten wie Blut oder Urin, werden häufig Analysegeräte verwendet, bei denen sich die zu analysierende Probe auf einem Testfeld eines Analyseelements befindet und in dem Testfeld gegebenenfalls mit einer oder mehreren Reagenzien reagiert, bevor sie analysiert wird. Die optische, insbesondere photometrische, und die elektrochemische Auswertung von Analyseelementen stellen die gebräuchlichsten Verfahren zur schnellen Bestimmung der Konzentration von Analyten in Proben dar. Analysesysteme mit Analyseelementen zur Probenanalyse werden allgemein im Bereich der Analytik, der Umweltanalytik und vor allem im Bereich der medizinischen Diagnostik eingesetzt. Insbesondere im Bereich der Blutglukosediagnostik aus Kapillarblut besitzen Analyseelemente, die photometrisch oder elektrochemisch ausgewertet werden, einen großen Stellenwert.

Es gibt verschiedene Formen von Analyseelementen. Bekannt sind zum Beispiel im Wesentlichen quadratische Plättchen, die auch als Slides bezeichnet werden, in deren Mitte sich ein mehrschichtiges Testfeld befindet. Diagnostische Analyseelemente, die streifenförmig ausgebildet sind, werden als Teststreifen bezeichnet. Im Stand der Technik sind Analyseelemente umfassend beschrieben, beispielsweise in den Dokumenten CA 2311496 A1, US 5,846,837 A, US 6,036,919 A oder WO 97/02487.

Weitere im Stand der Technik bekannte mehrschichtige Analyseelemente sind Analysebänder mit einer Vielzahl von Testfeldern, die in einer Kassette aufgewickelt zur Verwendung in einem Analysegerät bereitgestellt werden. Solche Kassetten und Analysebänder werden zum Beispiel in den Dokumenten DE 102005022022 A1, DE 103 32 488 A1, DE 103 43 896 A1, EP 1 424 040 A1, WO 2004/056269 A1 und CA 2506358 A1 beschrieben.

Die vorliegende Erfindung bezieht sich auf mehrschichtige Analyseelemente beliebiger Form, insbesondere auf streifenförmige Testelemente und auf Analysebänder. Bei der Herstellung solcher mehrschichtiger Analyseelemente findet üblicherweise ein Rolle-zu-Rolle-Verfahren Anwendung, bei dem einzelne oder mehrere miteinander verbundene Schichten der mehrschichtigen Analyseelemente als aufgewickeltes Band vorliegen und die einzelnen Analyseelemente oder Bestandteile davon von diesem Band durch Schneiden oder Stanzen mit geeigneten Messern oder Stanzwerkzeuge vereinzelt werden. Dieses Vereinzeln mittels Messern oder Stanzwerkzeugen hat jedoch den Nachteil, dass bei aus Fasern bestehenden Materialien (zum Beispiel Gewebestrukturen) ein Ausfransen, bei kleberhaltigen Schichten eine Messerkontamination und bei Folienbeschichtungen (zum Beispiel Reaktivfilmen) aufgrund der mechanischen Belastung die Gefahr des Abplatzens im Bereich der Schnittkante zu verzeichnen ist. Durch partielle Ablösung der Beschichtung an der Schnittkante entstehen unerwünschte Partikel und Stäube, bei massiver Ablösung eventuell sogar Ausschussware. Ferner sind die resultierenden Schnittkanten scharf, so dass zum Beispiel ein Analyseband mit solchen Schnittkanten beim Führen eines Abschnittes des Analysebandes über eine Dichtung aus der Kassette hinaus zum Aufnehmen und Analysieren einer Probe auf dem Abschnitt in einem Analysegerät, aufgrund seiner Scharfkantigkeit die Dichtungen beschädigen kann.

Es ist daher Aufgabe der vorliegenden Erfindung, mehrschichtige Analyseelemente und ein Verfahren zur Herstellung von mehrschichtigen Analyseelementen bereitzustellen, die die Nachteile des Standes der Technik vermeiden.

Diese Aufgabe wird erfindungsgemäß gelöst durch ein Verfahren mit den Merkmalen des Anspruchs 1. Das Verfahren dient zur Herstellung eines mehrschichtigen Analyseelements für Flüssigproben mit mindestens einem Testfeld zur Analyse der Flüssigproben, wobei mindestens zwei übereinander liegende Materialschichten miteinander verbunden werden, um einen Analyseelement-Rohling zu erhalten und das mehrschichtige Analyseelement oder ein Bestandteil des mehrschichtigen Analyseelements mittels Laserstrahlung aus dem Analyseelement-Rohling ausgeschnitten wird. Dabei schneidet die Laserstrahlung in mindestens zwei Bereichen verschiedene zu schneidende Materialschichten und die Laserstrahlung weist eine zum Schneiden wirksame Laserleistung auf, die in Abhängigkeit von der Dicke und dem Material der zu schneidenden Materialschichten in den Bereichen verändert wird.

Zur Herstellung des mehrschichtigen Analyseelements wird erfindungsgemäß zunächst ein Analyseelement-Rohling aus mindestens zwei übereinander liegenden Materialschichten vorgefertigt, vorzugsweise durch Verbinden der mindestens zwei übereinander liegenden Materialschichten. Diese Materialschichten können verschiedene Dicken und auch verschiedene flächige Ausdehnungen haben, so dass der Rohling im Querschnitt in verschiedenen Bereichen unterschiedliche Dicken und unterschiedliche Materialkombinationen aufweist. Die Materialschichten können fest miteinander verbunden werden, zum Beispiel durch Verkleben oder Verschweißen. Beispielsweise wird auf übereinander liegenden und fest miteinander verbundenen Schichten aus einem Kleber und einem Polymerband, die zusammen ein Klebeband bilden, ein Nachweisfilm in Form eines mittigen Längsstreifens aufgetragen, der auf dem Polymerband haftet und der nach der Vereinzelung der mehrschichtigen Analyseelemente oder ihrer Bestandteile die Nachweischemie für eine Vielzahl von Testfeldern zur Analyse von Flüssigproben bereitstellt.

Ein Testfeld ist in diesem Zusammenhang ein begrenzter Bereich des Analyseelements, in dem sich die Flüssigprobe während ihrer zum Beispiel elektrochemisch oder photometrisch durchgeführten Analyse befindet. Das Testfeld kann eine Nachweischemie enthalten, die mit der Probe reagiert und dadurch einen bei der Analyse der Probe nachweisbaren Effekt verursacht (zum Beispiel eine Farbänderung).

Die mindestens zwei Materialschichten, insbesondere mehrere miteinander durch Kleber verbundene Materialschichten, bilden einen Analyseelement-Rohling, der mindestens zwei Bereiche mit verschiedenen Materialschichten aufweist, die beim Ausschneiden des Analyseelements oder des Bestandteils des Analyseelements durchtrennt werden müssen. Das bedeutet, dass sich die Schichtdicken und/oder die Zusammensetzung der zu durchtrennenden aufeinanderliegenden Schichten des Analyseelement-Rohlings in den verschiedenen Bereichen unterscheiden. Entlang eines erfindungsgemäß durch einen Laserschneider ausgeführten Schnittes ändert sich daher in den verschiedenen Bereichen das Profil der zu schneidenden Schichten des Analyseelement-Rohlings, so dass zum Erreichen einer bestimmten Schnitttiefe, insbesondere zum Durchtrennen aller Materialschichten, in den verschiedenen Bereichen eine unterschiedliche Laserleistung erforderlich ist. Der Analyseelement-Rohling kann auch Materialschichten umfassen, die nicht beim Schneiden der mehrschichtigen Analyseelemente oder ihrer Bestandteile durchtrennt werden sollen. Beispielsweise können die durchtrennten, miteinander verbundenen Schichten von einer nicht durchtrennten Trägerschicht abgezogen und wie Etiketten weiter verwendet werden.

Aus dem Analyseelement-Rohling wird erfindungsgemäß das mehrschichtige Analyseelement oder der Bestandteil des mehrschichtigen Analyseelements mittels Laserstrahlung ausgeschnitten. Das Schneiden mittels Laserstrahlung ist im Stand der Technik bei der Herstellung verschiedenster Vorrichtungen bekannt und wird zum Beispiel in den Dokumenten US 4,776,904, US 6,191,382 B1 und US 6,388,231 B1 beschrieben.

Ein Bestandteil eines mehrschichtigen Analyseelements ist in diesem Zusammenhang ein erfindungsgemäßes, aus dem Analyseelement-Rohling ausgeschnittenes Element, das zur Herstellung des Analyseelements weiter verarbeitet wird, beispielsweise mit anderen Elementen verbunden wird. In einer bevorzugten Ausführungsform der vorliegenden Erfindung ist der Bestandteil ein Etikett, ausgeschnitten aus zumindest einem Klebeband mit darauf vorhandenem Nachweisfilm, das zur Herstellung eines Analysebandes auf ein Transportband aufgeklebt wird.

Zum Schneiden mittels Laserstrahlung können kommerzielle Laser verwendet werden, zum Beispiel Nd:YAG- oder CO₂-Laser. Vorzugsweise kommen CO₂-Laser mit Laserstrahlung einer Wellenlänge von 10,6 µm zum Einsatz. Der Strahldurchmesser des schneidenden Laserstrahls eines CO₂-Lasers beträgt vorzugsweise zwischen 80 und 400 µm. Der Strahldurchmesser des schneidenden Laserstrahls eines Nd:YAG-Lasers beträgt vorzugsweise zwischen 20 und 200 µm. Der Strahldurchmesser der schneidenden Laserstrahlen beträgt vorzugsweise zwischen 20 und 400 µm.

Beim Schneiden mittels Laserstrahlung kann ein Prozessgas eingesetzt werden, wobei durch eine schnelle Beseitigung der Schmelze im Bereich der Schnittfuge ein Kühleffekt auftritt, der in Abhängigkeit von dem geschnittenen Material zur Verbesserung der Schnittkantenqualität führen kann. Gleichzeitig kann durch ein einströmendes Prozessgas ein Schutz der Laseroptik (Fokuslinse) und eine geringere thermische Belastung der Umgebung erreicht werden. Typische Prozessgase sind Luft, N₂, Ar oder Gemische daraus.

Gemäß der vorliegenden Erfindung weist die zum Ausschneiden des Analyseelements oder eines Bestandteils des Analyseelements verwendete Laserstrahlung eine zum Schneiden wirksame Laserleistung auf, die in Abhängigkeit von den Dicken und Materialien der zu schneidenden Materialschichten in den verschiedenen Bereichen verändert wird. Dies hat den Vorteil, dass die Schnitttiefe in jedem Bereich des Analyseelement-Rohlings gesteuert werden kann. Damit stellt die vorliegende Erfindung ein Verfahren zum kontaktfreien Trennen (ohne mechanische Einflüsse wie durch Messer oder Ultraschall) bereit, mit dem aus mehrschichtigen Analyseelement-Rohlingen, die zum Beispiel aus einer Trägerfolie, Kleberschichten, einer enzymhaltigen Nachweisschicht und einem Gewebe bestehen können, Analyseelemente oder Analyseelement-Bestandteile unter Bestimmung der Schnitttiefe herausgeschnitten werden können. Abhängig vom Substrat kann über die Leistungsanpassung bei konstanter Fokuslage eine optimale Streckenenergie (J/m) in das zu schneidende Gut eingekoppelt werden. Ergänzend dazu kann über eine Veränderung der Fokuslage zusätzlich der Energieeintrag gesteuert werden.

Vorteilhafterweise wird bei aus Fasern bestehenden Materialien (zum Beispiel polymere Gewebe) ein Ausfransen beim Schneiden mittels Laserstrahlung vermieden. Kleberhaltige Schichten können mittels Laser ohne eine Kontamination des Schneidwerkzeugs geschnitten werden. Es entstehen beim Schneiden keine unerwünschten Partikel oder Stäube.

Das Schneiden mittels Laserstrahlung bietet ferner den Vorteil einer erhöhten Flexibilität beim Erzeugen einer Schneidkontur. Ein aus einem Laser austretender Laserstrahl wird zum Konturschneiden zum Beispiel nacheinander auf zwei in X- bzw. in Y-Richtung verkippbare Spiegel gelenkt und von dort aus auf den zu schneidenden Analyseelement-Rohling fokussiert. Die beiden Spiegel werden durch Scanner (zum Beispiel Elektroantriebe) automatisch verkippt, damit der fokussierte Laserstrahl die gewünschte Kontur auf dem Analyseelement-Rohling in einer definierten Geschwindigkeit abfährt. Dabei kann sich der Analyseelement-Rohling relativ zu den Spiegeln bewegen oder bis zum Fertigstellen der jeweiligen Kontur stationär bleiben. Die Scanner der Spiegel können durch ein Steuergerät angesteuert werden.

Die zum Schneiden wirksame Laserleistung kann bei der vorliegenden Erfindung z.B. mittels einer vorab programmierten Ansteuerung oder in Abhängigkeit von während des Schneidens mittels eines Sensors ermittelten Werten zu den Dicken und den Materialien der verschiedenen zu schneidenden Materialschichten variiert werden.

Die Veränderung der zum Schneiden wirksamen Laserleistung kann bei der vorliegenden Erfindung zum Beispiel durch eine vorab programmierte Ansteuerung des Laserschneiders erfolgen. Dazu müssen alle Dicken und Materialkombinationen in dem Analyseelement-Rohling in allen Bereichen entlang des geplanten Schnittes bekannt sein oder die in Abhängigkeit von der Dicke und dem Material in den verschiedenen Bereichen notwendigen wirksamen Laserleistungen zur Durchführung des Schnittes vorab experimentell ermittelt werden. Diese Variante bietet sich bei einem Rolle-zu-Rolle-Verfahren an, bei dem immer die gleiche Kontur aus sich fortlaufend wiederholenden, gleich aufgebauten Bereichen eines bandförmigen Analyseelement-Rohlings auszuschneiden ist. Dabei werden wiederholt Materialschichten mit dem gleichen Profil mittels der Laserstrahlung durchtrennt. Das Profil in Bezug auf die in den verschiedenen Bereichen zu schneidenden, unterschiedlichen Schichtdicken und/oder Schichtmaterialien wiederholt sich bei jeder Kontur, so dass sich die zum Erreichen einer bestimmten Schnitttiefe in jedem Bereich erforderlichen Laserleistungsänderungen beim Ausschneiden jeder einzelnen Kontur ebenfalls wiederholen. Die zur Steuerung des Lasers eingesetzte Software kann in diesem Fall entsprechend vorab programmiert und optimiert werden.

Bei der vorliegenden Erfindung kann die Veränderung der zum Schneiden wirksamen Laserleistung aber auch als Reaktion des Laserschneiders auf mittels Sensoren gemessene Daten zu der zu schneidenden Dicke und dem zu schneidenden Material des Analyseelement-Rohlings erfolgen. Ein Sensor kann beispielsweise bestimmte Felder auf der Oberfläche des Analyseelement-Rohlings optisch detektieren, woraufhin eine Auswerteeinheit diesen Feldern bestimmte Dicken und/oder Materialien zuordnet, die vorab bekannt sein müssen. Es kann aber auch zum Beispiel mittels eines Sensors eine Messung der Dicke des zu schneidenden Bereichs erfolgen. In diesem Fall wird die Laserleistung online in Abhängigkeit von den mittels des Sensors für den jeweiligen Bereich ermittelten Dicken und/oder Materialien der zu schneidenden Schichten geregelt, um in jedem Bereich eine gewünschte Schnitttiefe zu erreichen.

Gemäß einer bevorzugten Ausführungsform der vorliegenden Erfindung wird die zum Schneiden wirksame Laserleistung durch mindestens ein Verfahren ausgewählt aus der Gruppe
- Variation einer von einem Laser zur Verfügung gestellten Laserleistung durch Ansteuern des Lasers oder durch ein externes Element zur Leistungsänderung,
- Variation eines Laserstrahldurchmessers der zum Ausschneiden verwendeten Laserstrahlung,
- Variation einer Geschwindigkeit einer Bewegung der Laserstrahlung und des zu schneidenden Analyseelement-Rohlings relativ zueinander und
- Variation der Fokuslage (Höhe des Fokus) der zum Ausschneiden verwendeten Laserstrahlung relativ zu dem Analyseelement-Rohling.
verändert. Ein externes Element zur Leistungsänderung ist dabei außerhalb des Lasers angeordnet und beeinflusst die zum Schneiden wirksame Laserleistung durch ein Verändern der von dem Laser zur Verfügung gestellten Laserleistung. Beispiele für solche externen Elemente zur Leistungsänderung umfassen z.B. Güteschalter (Q-switches). Die Geschwindigkeit der Bewegung der Laserstrahlung und des zu schneidenden Analyseelement-Rohlings relativ zueinander ergibt sich dabei aus der Scanngeschwindigkeit des schneidenden Laserstrahls und/oder der Transportgeschwindigkeit des Analyseelement-Rohlings relativ zu der Laseroptik.

Gemäß einer bevorzugten Ausführungsform der vorliegenden Erfindung ist das erfindungsgemäße Verfahren zur Herstellung eines mehrschichtigen Analyseelements ein Rolle-zu-Rolle-Verfahren, bei dem Analyseelement-Rohlinge bandförmig gefertigt und daraus mittels der Laserstrahlung die Analyseelemente oder Bestandteile davon ausgeschnitten werden.

Die in dem erfindungsgemäßen Verfahren zur Fertigung des Analyseelement-Rohlings eingesetzten mindestens zwei Materialschichten umfassen vorzugsweise mindestens eine Schicht ausgewählt aus der Gruppe Polymerschicht, hydrophobe Schicht, Klebeschicht, Gewebeschicht, metallbeschichtete Polymerschicht, Metallschicht und durch die Laserstrahlung schmelzbare Schicht.

Eine Polymerschicht ist beispielsweise eine Schicht aus einem Polymer ausgewählt aus der Gruppe Polyester, Polyimide, Polyetherketone, Polyamide, Polysulfone, Polyethersulfone, Polyetherimide, Polycarbonat, Polyolefine, Polymethylmethacrylat (PMMA), faserverstärkte Polymere, Polytetrafluorethylen (PTFE), Polyurethane oder Mischungen daraus. Die Polymerschicht kann z.B. als Träger und/oder als durch die Laserstrahlung an der Schnittkante schmelzbare Schicht vorgesehen sein.

Eine hydrophobe Schicht verhindert das Ausbreiten einer wässrigen Probe. Sie kann beispielsweise ein Testfeld umgeben, so dass eine Flüssigprobe in dem Testfeld "eingeschlossen" ist. Die hydrophobe Schicht kann zum Beispiel durch Imprägnieren bestimmter Bereiche anderer Schichten des Analyseelement-Rohlings hergestellt werden.

Eine Klebeschicht ist eine Schicht aus einem Kleber, der bei dem erfindungsgemäßen Verfahren zum Verbinden der einzelnen Materialschichten untereinander oder mit dem mindestens einen Testfeld oder zum Verbinden eines Analyseelement-Bestandteils mit einem anderen Analyseelement-Bestandteil dienen kann.

Eine Gewebeschicht ist als faserhaltiges Gewebe ausgebildet. Es kann sich beispielsweise um ein polymeres Gewebe handeln, das das Testfeld des Analyseelements bedeckt und aufgrund seiner Struktur zum Verteilen einer Flüssigprobe in dem Testfeld beiträgt. Es kann auch als durch die Laserstrahlung an der Schnittkante schmelzende Schicht vorgesehen sein.

Eine metallbeschichtete Polymerschicht oder eine Metallschicht kann zum Beispiel bei elektrochemisch auszuwertenden Teststreifen zum Bereitstellen von Elektroden oder als Struktur zum Leiten von elektrischen Signalen vorgesehen sein. Die metallbeschichtete Polymerschicht oder die Metallschicht enthält zum Beispiel ein Metall ausgewählt aus der Gruppe Palladium, Platin, Gold, Silber, Titan und Kupfer.

Eine durch die Laserstrahlung schmelzbare Schicht ist zum Beispiel eine thermoplastische Polymerschicht, die durch die Laserstrahlung im Bereich der entstehenden Schnittkante geschmolzen wird. Gemäß einer bevorzugten Erfindung der vorliegenden Erfindung wird beim Ausschneiden des mehrschichtigen Analyseelements oder des Bestandteils des mehrschichtigen Analyseelements mittels Laserstrahlung aus dem Analyseelement-Rohling entlang mindestens einer Schnittkante durch die Laserstrahlung mindestens eine Materialschicht geschmolzen, so dass sie einen abrundenden Effekt auf die Schnittkante hat. Dies hat den Vorteil, dass die abgerundete Schnittkante keine Verletzungen oder Beschädigungen hervorruft, wenn sie zum Beispiel entlang der Haut eines Patienten oder einer Dichtung in dem Analysegerät bewegt wird.

Jede der mindestens zwei Materialschichten des erfindungsgemäßen Analyseelement-Rohlings hat vorzugsweise eine Dicke von 0,05 µm bis 300 µm, besonders bevorzugt von 5 µm bis 80 µm. Der Analyseelement-Rohling hat vorzugsweise in seinem dicksten Bereich eine Dicke von 10 µm bis 180 µm, bevorzugt zwischen 80 µm und 300 µm.

Gemäß einer bevorzugten Ausführungsform der vorliegenden Erfindung werden beim Ausschneiden des mehrschichtigen Analyseelements oder des Bestandteils des mehrschichtigen Analyseelements mittels Laserstrahlung in den mindestens zwei Bereichen alle oder ein Teil der Materialschichten des Analyseelement-Rohlings durchtrennt. Dies kann sehr genau durch die beim Schneiden wirksame Laserleistung gesteuert werden, durch die die Schnitttiefe bestimmt werden kann.

Eine Ausführungsform der vorliegenden Erfindung besteht darin, dass das mehrschichtige Analyseelement ein Teststreifen mit einem Testfeld zur elektrochemischen oder photometrischen Analyse einer Flüssigprobe ist und mittels der Laserstrahlung aus einem als Band aus Teststreifen vorliegenden Analyseelement-Rohling vereinzelt wird.

Eine weitere Ausführungsform der vorliegenden Erfindung besteht darin, dass das mehrschichtige Analyseelement ein Analyseband mit einer Vielzahl von in Bandrichtung voneinander beabstandeten Testfeldern ist, wobei der Analyseelement-Rohling in Form eines Testetikettenbandes zumindest aus einem Nachweisfilm und einem Klebeband vorgefertigt wird und mittels der Laserstrahlung je ein Testfeld enthaltende selbstklebende Testetiketten aus dem Testetikettenband ausgeschnitten werden, die als Bestandteile des Analysebandes verwendet werden. Die Testetiketten werden vorzugsweise auf ein Transportband übertragen und das Analyseband aus dem mit den Testetiketten versehenen Transportband mittels Laserstrahlung durch Längsschnitte ausgeschnitten. Durch diese Längsschnitte entstehen Schnittkanten entlang der Längsränder des jeweiligen Analysebandes. Die Längsschnitte können dabei zum Ausschneiden eines Analysebandes mit einer bestimmten Breite aus einem Transportband dienen. Aus nebeneinander angeordneten Teilen eines Transportbandes können aber auch mehrere Analysebänder ausgeschnitten werden. Da es sich dabei um Schnitte in Längsrichtung des Transportbandes handelt, die keine Richtungsänderung des oder der schneidenden Laserstrahlen erfordern, kann ein feststehender Laserstrahl verwendet werden, der auf das Transportband gerichtet ist, das sich mit einer bestimmten, gegebenenfalls konstanten Geschwindigkeit relativ zu dem Laserstrahl bewegt. Für dieses Verfahren eignet sich der Einsatz von einer Rolle-zu-Rolle-arbeitenden Fördereinrichtung zur Bewegung des aufrollbaren, mit den Testetiketten versehenen Transportbandes.

Die Erfindung bezieht sich weiterhin auf ein mehrschichtiges Analyseelement für Flüssigproben mit mindestens zwei (vorzugsweise miteinander verbundenen) Materialschichten gemäß Anspruch 10. Das erfindungsgemäße mehrschichtige Analyseelement umfasst mindestens ein Testfeld zur Analyse der Flüssigproben. Das Analyseelement weist Schnittkanten durch mindestens zwei Bereiche mit verschiedenen Materialschichten auf, die durch Laserstrahlung mit einer an die Dicke und das Material der Bereiche angepasster, zum Schneiden wirksamer Laserleistung erzeugt wurden. Das erfindungsgemäße mehrschichtige Analyseelement wird vorzugsweise durch das bereits beschriebene erfindungsgemäße Verfahren hergestellt.

Vorzugsweise ist das Analyseelement ein Analyseband mit einer Vielzahl von in Bandrichtung voneinander beabstandeten Testfeldern, bei dem die Testfelder auf selbstklebenden Testetiketten angeordnet sind, die zumindest einen Nachweisfilm und ein Klebeband umfassen und die auf ein Trägerband aufetikettiert sind, wobei die Testetiketten Schnittkanten aufweisen, die durch Bereiche mit dem Klebeband und durch Bereiche mit dem Nachweisfilm und dem Klebeband verlaufen und die durch Schneiden mit Laserstrahlung mit einer an die Dicke und die Materialien der geschnittenen Materialschichten in den Bereichen angepasster, zum Schneiden wirksamer Laserleistung erzeugt wurden. Dabei kann ferner das Analyseband entlang von Längsrändern Längsschnittkanten aufweisen, die durch Laserstrahlung beim Ausschneiden des Analysebandes aus dem Transportband erzeugt wurden. Bei dem Analyseband kann das Transportband selbst, auf das die Testetiketten zur Herstellung des Analysebands aufetikettiert werden, als Trägerband des Analysebandes dienen. Es kann aber auch mindestens ein Analyseband mit Längsschnitten, die mittels Laserstrahlung oder einem anderen, dem Fachmann bekannten Schneideverfahren erfolgen können, von dem die Testetiketten enthaltenden Transportband abgeschnitten werden.

Anhand der Zeichnung wird die Erfindung nachstehend näher erläutert.

Es zeigt:
- Figur 1: schematisch eine Draufsicht auf einen Analyseelement-Rohling zur Herstellung eines mehrschichtigen Analyseelements gemäß der vorliegenden Erfindung,
- Figur 2: den Analyseelement-Rohling aus Figur 1, aus dem Etiketten als Bestandteil eines erfindungsgemäßen Analyseelements mittels Laserstrahlung ausgeschnitten wurden,
- Figur 3: schematisch eine Draufsicht auf ein mehrschichtiges Analyseelement gemäß der vorliegenden Erfindung in Form eines Analysebandes, hergestellt nach dem erfindungsgemäßen Verfahren,
- Figur 4: schematisch eine seitliche perspektivische Ansicht eines mehrschichtigen Analyseelements gemäß der vorliegenden Erfindung in Form eines Analysebandes, hergestellt nach dem erfindungsgemäßen Verfahren,
- Figur 5: schematisch eine erste Ausführungsform eines erfindungsgemäßen Verfahrens, bei dem Teststreifen von einem Band abgeschnitten werden und
- Figur 6: schematisch eine zweite Ausführungsform eines erfindungsgemäßen Verfahrens, bei dem Teststreifen von einem Band abgeschnitten werden.

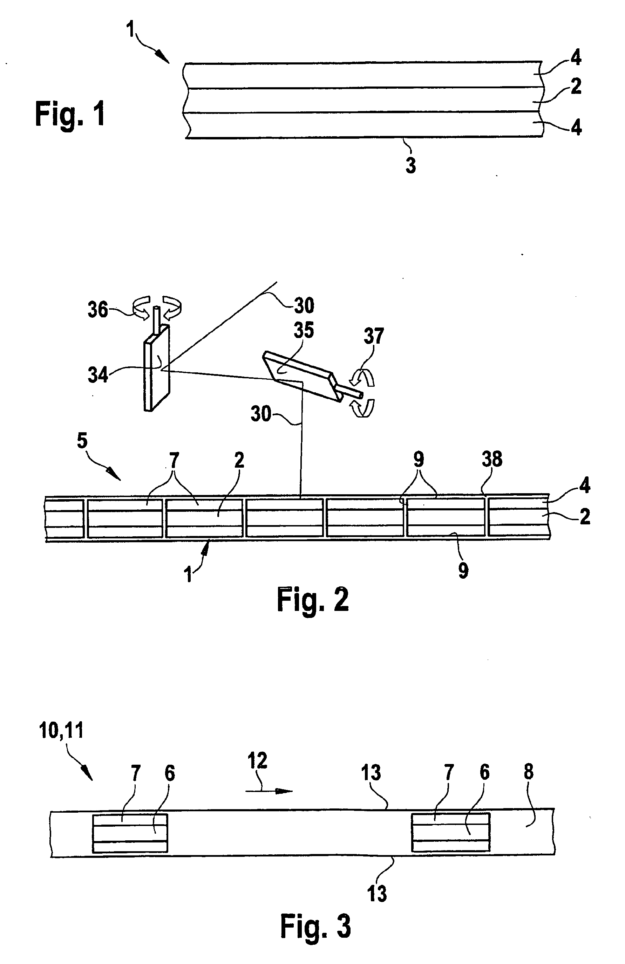

Figur 1 zeigt einen Analyseelement-Rohling zur erfindungsgemäßen Herstellung eines erfindungsgemäßen mehrschichtigen Analyseelements in Form eines Analysebandes.

Der Analyseelement-Rohling 1 umfasst mehrere Materialschichten, insbesondere ein Klebeband mit mindestens einer Polymerschicht und mindestens einer Klebeschicht, auf die eine weitere Materialschicht in Form eines Nachweisfilmes 2 aufgetragen wurde. Der Nachweisfilm 2 bedeckt nur einen mittigen Streifen der anderen Schichten 3 des Analyseelement-Rohlings 1, so dass der Analyseelement-Rohling 1 im Bereich des Nachweisfilms 2 eine größere Dicke und im Querschnitt eine andere Materialzusammensetzung aufweist, als in den streifenförmigen Bereichen 4, die nicht mit dem Nachweisfilm 2 bedeckt sind.

Figur 2 zeigt den Analyseelement-Rohling aus Figur 1, aus dem Etiketten als Bestandteil eines erfindungsgemäßen Analyseelements mittels Laserstrahlung ausgeschnitten wurden.

Die Herstellung eines Analysebandes erfolgt durch eine zweistufige Rolle-zu-Rolle-Verarbeitung. In der ersten Stufe wird gemäß Figuren 1 und 2 ein Testetikettenband 5 vorgefertigt, von dem in der zweiten Stufe gemäß Figur 3 mittels Laserstrahlung ausgeschnittene, Testfelder 6 enthaltende Testetiketten 7 (als Bestandteile eines erfindungsgemäßen mehrschichtigen Analyseelements) abgezogen und auf ein Transportband 8 aufgeklebt werden.

Das Ausschneiden der Testetiketten 7 erfolgt mittels eines Laserstahls 30, der die Kontur 9 abfährt. Der aus einem (nicht dargestellten) Laser austretende Laserstrahl 30 wird dazu nacheinander auf zwei Spiegel 34, 35 gelenkt. Der erste Spiegel 34 kann den Laserstrahl 30 durch sein Verkippen in der ersten Drehrichtung 36 in x-Richtung ablenken. Der zweite Spiegel 35 kann den Laserstrahl 30 durch sein Verkippen in der zweiten Drehrichtung 37 in y-Richtung ablenken. Dadurch kann mittels des Laserstahls 30 eine beliebige Kontur und insbesondere die Kontur 9 der Testetiketten 7 abgefahren werden.

Beim Ausschneiden der Testetiketten 7 aus dem Analyseelement-Rohling 1 durchtrennt die Laserstrahlung die streifenförmigen Bereiche 4 (ohne Nachweisfilm) und den Bereich mit dem Nachweisfilm 2. Diese Bereiche 4, 2 weisen verschiedene Dicken und ihre zu durchtrennenden Schichten verschiedene Materialkombinationen auf. Die zum Schneiden wirksame Laserleistung des Laserstrahls 30, der die Kontur 9 der Testetiketten abfährt, wird erfindungsgemäß in Abhängigkeit von der Dicke und/oder den Materialien der zu schneidenden Schichten in den verschiedenen Bereichen verändert, vorzugsweise durch Änderung der von dem verwendeten Laser zur Verfügung gestellten Laserleistung bei konstantem Laserstrahldurchmesser, konstanter Laserscanngeschwindigkeit und konstanter Geschwindigkeit des Analyseelement-Rohlings 1. Die Laserleistung wird dabei in jedem Bereich so gewählt, dass eine bestimmte Schnitttiefe erreicht wird. Vorzugsweise werden in der in Figur 2 dargestellten Ausführungsform entlang der Kontur 9 nicht alle Schichten mittels der Laserstrahlung durchtrennt, sondern die Laserleistung in jedem Bereich so angepasst, dass eine unterste Trägerschicht 38 weitgehend unbeeinflusst bleibt. Die Testetiketten 7 können dann von dieser untersten Trägerschicht 38 abgezogen und auf ein Transportband aufgeklebt werden, wie in Figur 3 dargestellt.

Figur 3 zeigt ein erfindungsgemäßes mehrschichtiges Analyseelement in Form eines Analysebandes, das nach dem erfindungsgemäßen Verfahren hergestellt wurde.

Das mehrschichtige Analyseelement 10 in Form eines Analysebandes 11 umfasst ein Trägerband 8 und eine Vielzahl von in Bandrichtung 12 voneinander beabstandeter Testfelder 6, die sich auf den mehrschichtigen Testetiketten 7 befinden. Das Trägerband 8 weist Schnittkanten 13 auf, die ebenfalls durch Laserstrahlung geschnitten worden sein können. Diese Schnittkanten entstehen in diesem Fall durch Längsschnitte, durch die aus einem (nicht dargestellten) Transportband mittels Laserstrahlung das Trägerband 8 des Analysebandes ausgeschnitten wird. Falls das Transportband jedoch bereits die gewünschte Breite aufweist, kann es ohne ein Zurechtschneiden als Trägerband 8 des Analysebandes 11 dienen.

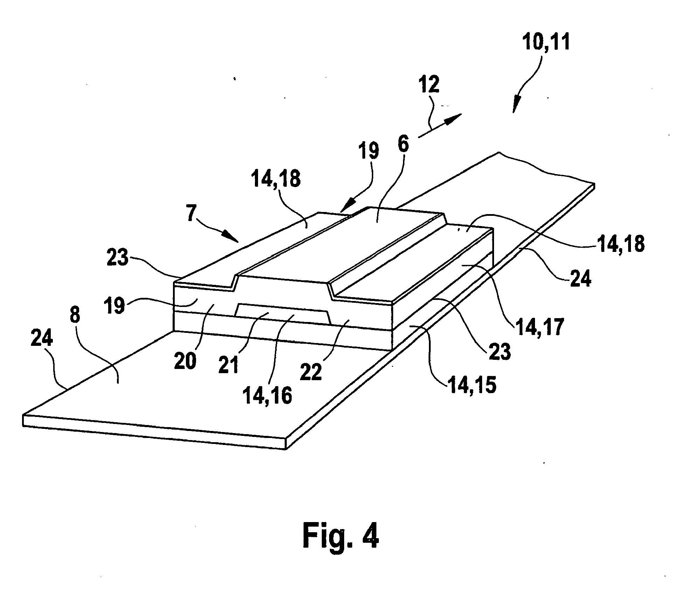

Figur 4 zeigt eine perspektivische Ansicht eines erfindungsgemäßen mehrschichtigen Analyseelements in Form eines Analysebandes, das nach dem erfindungsgemäßen Verfahren hergestellt wurde.

Das Analyseband 11 umfasst ein Trägerband 8 und Testetiketten 7. Die Testetiketten 7 umfassen mehrere Materialschichten 14, die erfindungsgemäß mittels Laserstrahlung zurechtgeschnitten wurden. Zu diesen Materialschichten 14 zählen zwei Klebeschichten und eine Polymerschicht, die ein Klebeband 15 bilden, ein Nachweisfilm 16, der eine Testchemie enthält, eine Polymergewebeschicht 17, die mittig den Nachweisfilm 16 und seitlich das Klebeband 15 bedeckt und hydrophobe Schichten 18, die als seitliche Streifen auf der Polymergewebeschicht 17 angeordnet sind. Diese Schichtfolge kann auch anders gewählt werden. Beispielsweise können die hydrophoben Schichten 18 auch unter der Polymergewebeschicht 17 und über dem Klebeband 15 angeordnet sein. Mittig auf dem Testetikett 7 befindet sich bei der in Figur 4 dargestellten Ausführungsform der vorliegenden Erfindung das Testfeld 6, auf dem die Analyse einer Flüssigprobe durchgeführt werden kann.

Das Analyseelement 10 gemäß Figur 4 weist quer zur Bandrichtung 12 Schnittkanten 19 des Testetiketts 7 auf, die durch drei Bereiche 20, 21, 22 mit Materialschichten 14 verschiedener Materialien und verschiedener Dicken verlaufen. Im ersten Bereich 20 hat die Laserstrahlung erfindungsgemäß die Materialschichten hydrophobe Schicht 18, Polymergewebeschicht 17 und Klebeband 15 durchgeschnitten. Im zweiten Bereich 21 hat die Laserstrahlung die Materialschichten Polymergewebeschicht 17, Nachweisfilm 16 und Klebeband 15 durchtrennt. Die von der Laserstrahlung im dritten Bereich 22 geschnittenen Materialschichten 14 entsprechen denen des ersten Bereichs 20. Die Schnittkanten 19 wurden erfindungsgemäß mittels Laserstrahlung erzeugt, die eine an die Dicke und das Material der Materialschichten in den drei Bereichen 20, 21, 22 angepasste, zum Schneiden wirksame Laserleistung aufwies. Durch das Schneiden mittels Laserstrahlung zum Erzeugen aller Schnittkanten 19, 23 des Testetiketts 7 und der Längsschnittkanten 24 des Trägerbandes 8 wurden bestimmte Materialschichten 14 und das Trägerband an den Schnittkanten 19, 23, 24 geschmolzen und dadurch abgerundet (nicht dargestellt), so dass das Dichtungselement einer Kassette, die das Analyseband 11 aufnimmt, beim Transport des Analysebandes 11 entlang des Dichtungselementes der Kassette nicht durch scharfkantige Schnittkanten beschädigt werden kann.

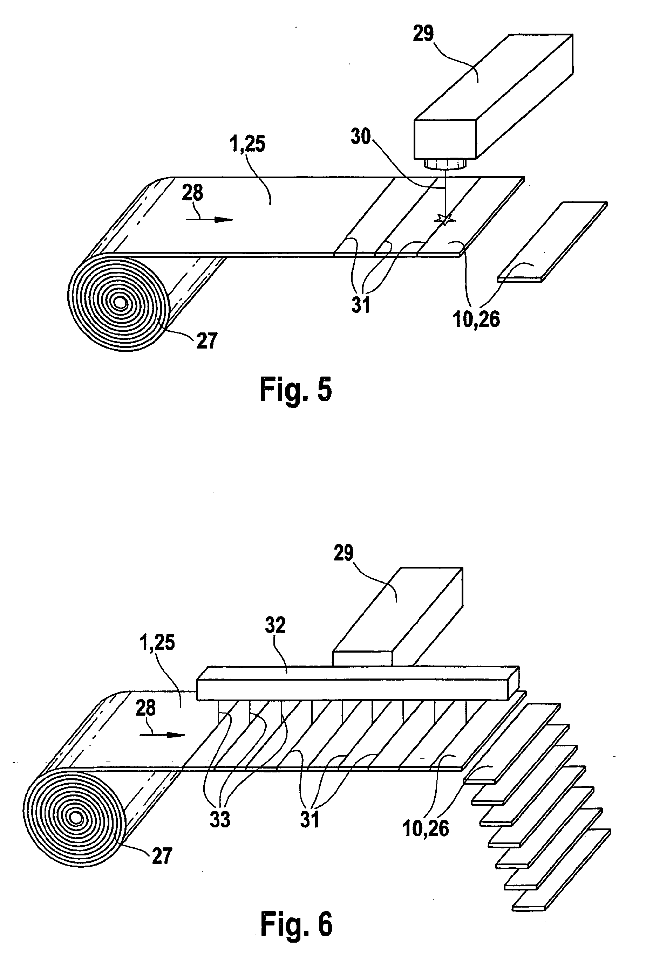

Figur 5 zeigt schematisch eine erste Ausführungsform eines erfindungsgemäßen Verfahrens, bei dem Teststreifen von einem Band mittels Laserstrahlung abgeschnitten werden.

Ein Band 25 aus einer Vielzahl an Teststreifen 26 liegt als Analyseelement-Rohling 1 vor. Das Band 25 wird von einer Rolle 27 abgerollt und in der Transportrichtung 28 auf einen schneidenden Laser 29 zu bewegt. Die in dem Band 25 aneinander hängenden Teststreifen 26 sind mehrschichtige Analyseelemente 10, die jeweils ein (nicht dargestelltes) Testfeld zur elektrochemischen oder photometrischen Analyse einer Flüssigprobe aufweisen. Aus dem Laser 29 tritt ein Laserstrahl 30 aus, der auf das Band 25 aus Teststreifen 26 gerichtet ist. Der Laserstrahl 30 fährt jeweils die Schnittlinien 31 ab, um die Teststreifen 26 von dem Band 25 abzuschneiden und somit zu vereinzeln. Dabei weist der Laserstrahl 30 eine zum Schneiden wirksame Leistung auf, die in Abhängigkeit von den Dicken und Materialien der zu schneidenden Materialschichten der Teststreifen 26 entlang der Schnittlinien 31 verändert wird, damit eine ausreichende, aber nicht zu hohe Laserleistung zum Abschneiden der Teststreifen 26 zur Verfügung steht.

Figur 6 zeigt schematisch eine zweite Ausführungsform eines erfindungsgemäßen Verfahrens, bei dem Teststreifen von einem Band mittels Laserstrahlung abgeschnitten werden.

Ein Band 25 aus einer Vielzahl an Teststreifen 26 liegt als Analyseelement-Rohling 1 vor. Das Band 25 wird von einer Rolle 27 abgerollt und in der Transportrichtung 28 auf einen schneidenden Laser 29 zu bewegt. Die in dem Band 25 aneinander hängenden Teststreifen 26 sind mehrschichtige Analyseelemente 10, die jeweils ein (nicht dargestelltes) Testfeld zur elektrochemischen oder photometrischen Analyse einer Flüssigprobe aufweisen. Aus dem Laser 29 tritt ein Laserstrahl aus (nicht dargestellt), der durch ein optisches Bauteil 32 in eine Vielzahl von parallel ausgerichteten Laserstrahlen 33 aufgespaltet wird.

Die Laserstrahlen 33 sind auf das Band 25 aus Teststreifen 26 gerichtet ist. Die Laserstahlen 33 fahren gleichzeitig eine Vielzahl von parallel verlaufenden Schnittlinien 31 ab, um die Teststreifen 26 von dem Band 25 abzuschneiden und somit zu vereinzeln. Dabei weisen die Laserstrahlen 33 eine zum Schneiden wirksame Leistung auf, die in Abhängigkeit von den Dicken und Materialien der zu schneidenden Materialschichten der Teststreifen 26 entlang der Schnittlinien 31 verändert wird, damit eine ausreichende, aber nicht zu hohe Laserleistung zum Abschneiden der Teststreifen 26 zur Verfügung steht.

### Bezugszeichenliste

- 1: Analyseelement-Rohling
- 2: Nachweisfilm
- 3: Schichten
- 4: streifenförmige Bereiche
- 5: Testetikettenband
- 6: Testfelder
- 7: Testetiketten
- 8: Trägerband oder Transportband
- 9: Kontur
- 10: mehrschichtiges Analyseelement
- 11: Analyseband
- 12: Bandrichtung
- 13: Schnittkanten
- 14: Materialschichten
- 15: Klebeband
- 16: Nachweisfilm
- 17: Polymergewebeschicht
- 18: hydrophobe Schicht
- 19: Schnittkanten
- 20: erster Bereich
- 21: zweiter Bereich
- 22: dritter Bereich
- 23: Schnittkanten
- 24: Längsschnittkanten
- 25: Band
- 26: Teststreifen
- 27: Rolle
- 28: Transportrichtung
- 29: Laser
- 30: Laserstrahl
- 31: Schnittlinien
- 32: optisches Bauteil
- 33: Laserstrahlen
- 34: erster Spiegel
- 35: zweiter Spiegel
- 36: erste Drehrichtung
- 37: zweite Drehrichtung
- 38: unterste Trägerschicht

## Patentansprüche

1. Verfahren zur Herstellung eines mehrschichtigen Analyseelements (10) für Flüssigproben mit mindestens einem Testfeld (6) zur Analyse der Flüssigproben, wobei ein Analyseelement-Rohling (1) aus mindestens zwei übereinander liegenden Materialschichten (14) bereitgestellt wird und das mehrschichtige Analyseelement (10) oder ein Bestandteil des mehrschichtigen Analyseelements (10) mittels Laserstrahlung aus dem Analyseelement-Rohling (1) ausgeschnitten wird, wobei die Laserstrahlung in mindestens zwei Bereichen (20, 21, 22) verschiedene zu schneidende Materialschichten (14) schneidet, wobei die Laserstrahlung einen Bereich (21) mit einem Nachweisfilm (2, 16) durchtrennt, und wobei die Laserstrahlung eine zum Schneiden wirksame Laserleistung aufweist, die in Abhängigkeit von den Dicken und den Materialien der verschiedenen zu schneidenden Materialschichten (14) in den Bereichen (20, 21, 22) verändert wird, wobei beim Ausschneiden des mehrschichtigen Analyseelements (10) oder des Bestandteils des mehrschichtigen Analyseelements (10) mittels Laserstrahlung aus dem Analyseelement-Rohling (1) entlang einer Schnittkante (19, 23) durch die Laserstrahlung mindestens eine Materialschicht geschmolzen wird, so dass sie einen abrundenden Effekt auf die Schnittkante (19, 23) hat.

2. Verfahren gemäß Anspruch 1, **dadurch gekennzeichnet, dass** die mindestens zwei übereinander liegenden Materialschichten (14) miteinander verbunden werden, um den Analyseelement-Rohling zu erhalten.

3. Verfahren gemäß einem der Ansprüche 1 oder 2, **dadurch gekennzeichnet, dass** die zum Schneiden wirksame Laserleistung durch mindestens ein Verfahren ausgewählt aus der Gruppe
• Variation einer von einem Laser zur Verfügung gestellten Laserleistung durch Ansteuern des Lasers oder durch ein externes Element zur Leistungsänderung,
• Variation eines Laserstrahldurchmessers der zum Ausschneiden verwendeten Laserstrahlung,
• Variation einer Geschwindigkeit einer Bewegung der Laserstrahlung und des zu schneidenden Analyseelement-Rohlings (1) relativ zueinander und
• Variation einer Fokuslage der Laserstrahlung relativ zu dem Analyseelement-Rohling
verändert wird.

4. Verfahren gemäß einem der Ansprüche 1 bis 3, **dadurch gekennzeichnet, dass** die zum Schneiden wirksame Laserleistung mittels einer vorab programmierten Ansteuerung variiert wird oder dass die zum Schneiden wirksame Laserleistung in Abhängigkeit von während des Schneidens mittels eines Sensors ermittelten Werten zu den Dicken und den Materialien der verschiedenen zu schneidenden Materislschichten variiert wird.

5. Verfahren gemäß einem der Ansprüche 1 bis 4, **dadurch gekennzeichnet, dass** die mindestens zwei Materialschichten (14) mindestens eine Schicht ausgewählt aus der Gruppe Polymerschicht (17), hydrophobe Schicht (18), Klebeschicht, Gewebeschicht (17), metallbeschithtete Polymerschicht, Metallschicht und durch die Laserstrahlung schmelzbare Schicht (17) umfassen.

6. Verfahren gemäß einem der Ansprüche 1 bis 5, **dadurch gekennzeichnet, dass** beim Ausschneiden des mehrschichtigen Analyseelements (10) oder des Bestandteils des mehrschichtigen Analyseelements (10) mittels Laserstrahlung in den mindestens zwei Bereichen (20, 21, 22) alle oder ein Teil der Materialschichten (14) des Analyseelement-Rohlings (1) durchtrennt werden.

7. Verfahren gemäß einem der Ansprüche 1 bis 6, **dadurch gekennzeichnet, dass** das mehrschichtige Analyseelement (10) ein Teststreifen mit einem Testfeld zur elektrochemischen oder photometrischen Analyse einer Flüssigprobe ist und mittels der Laserstrahlung aus einem als Band aus Teststreifen vorliegenden Analyseelement-Rohling (1) vereinzelt wird.

8. Verfahren gemäß einem der Ansprüche 1 bis 6, **dadurch gekennzeichnet, dass** das mehrschichtige Analyseelement (10) ein Analyseband (11) mit einer Vielzahl von in Bandrichtung (12) voneinander beabstandeten Testfeldern (6) ist, wobei der Analyseelement-Rohling (1) in Form eines Testetikettenbandes (5) zumindest aus einem Nachweisfilm (2, 16) und einem Klebeband (15) vorgefertigt wird und mittels der Laserstrahlung je ein Testfeld (6) enthaltende selbstklebende Testetiketten (7) aus dem Testetikettenband (5) ausgeschnitten werden, die als Bestandteile des Analysebandes (11) verwendet werden.

9. Verfahren gemäß Anspruch 8, **dadurch gekennzeichnet, dass** die Testetiketten (7) auf ein Transportband übertragen werden und das Analyseband (11) aus dem mit den Testetiketten (7) versehenen Transportband mittels Laserstrahlung durch Längsschnitte ausgeschnitten wird.

10. Mehrschichtiges Analyseelement (10) für Flüssigproben mit mindestens zwei Materialschichten (14), enthaltend mindestens ein Testfeld (6) zur Analyse der Flüssigproben, **dadurch gekennzeichnet, dass** das Analyseelement (10) Schnittkanten (19) durch mindestens zwei Bereiche (20, 21, 22) mit verschiedenen Materialschichten (14) aufweist, die durch Laserstrahlung mit einer an die Dicken und die Materialien der Bereiche (20, 21, 22) angepasster, zum Schneiden wirksamer Laserleistung erzeugt wurden, wobei beim Ausschneiden des mehrschichtigen Analyseelements (10) oder des Bestandteils des mehrschichtigen Analyseelements (10) mittels Laserstrahlung aus dem Analyseelement-Rohling (1) entlang einer Schnittkante (19, 23) durch die Laserstrahlung mindestens eine Materialschicht geschmolzen ist, so dass sie einen abrundenden Effekt auf die Schnittkante (19, 23) hat.

11. Mehrschichtiges Analyseelement gemäß Anspruch 10, **dadurch gekennzeichnet, dass** das Analyseelement (10) ein Analyseband (11) mit einer Vielzahl von in Bandrichtung (12) voneinander beabstandeten Testfeldern (6) ist, bei dem die Testfelder (6) auf selbstklebenden Testetiketten (7) angeordnet sind, die zumindest einen Nachweisfilm (2, 16) und ein Klebeband (15) umfassen und die auf ein Trägerband (8) aufetikettiert sind, wobei die Testetiketten (7) Schnittkanten (19) aufweisen, die durch Bereiche (20, 22) mit dem Klebeband (15) und durch Bereiche (21) mit dem Nachweisfilm (16) und dem Klebeband (15) verlaufen und die durch Schneiden mit Laserstrahlung mit einer an die Dicken und Materialien der geschnittenen Materialschichten (14) in den Bereichen (20, 21, 22) angepasster, zum Schneiden wirksamer Laserleistung erzeugt wurden.

12. Mehrschichtiges Analyseelement gemäß Anspruch 11, **dadurch gekennzeichnet, dass** das Trägerband (8) entlang von Längsrändern Längsschnittkanten (24) aufweist, die durch Laserstrahlung erzeugt wurden.

## Claims

1. Method for production of a multi-layer analysis element (10) for liquid samples, with at least one test field (6) for the analysis of the liquid samples, an analysis element blank (1) composed of at least two superposed material layers (14) being made available, and the multi-layer analysis element (10) or a constituent part of the multi-layer analysis element (10) being cut out from the analysis element blank (1) by means of laser radiation, the laser radiation cutting through different material layers (14) in at least two areas (20, 21, 22), the laser radiation cutting through an area (21) with a detection film (2, 16), and the laser radiation having a laser power which is effective for said cutting and which is varied as a function of the thicknesses and the materials of the different material layers (14) to be cut in the areas (20, 21, 22) and, during the cutting of the multi-layer analysis element (10) or of the constituent part of the multi-layer analysis element (10) by means of laser radiation from the analysis element blank (1) along a cut edge (19, 23), at least one material layer being melted by the laser radiation, such that it has a rounding effect on the cut edge (19, 23).

2. Method according to Claim 1, **characterized in that** the at least two superposed material layers (14) are connected to one another in order to obtain the analysis element blank.

3. Method according to one of Claims 1 and 2, **characterized in that** the laser power effective for the cutting is varied by at least one method chosen from the group including
• variation of a laser power provided by a laser, by control of the laser or by an external element for power variation,
• variation of a laser beam diameter of the laser radiation used for the cutting,
• variation of the speed of a movement of the laser radiation and of the analysis element blank (1) relative to one another, and
• variation of a focus position of the laser radiation relative to the analysis element blank.

4. Method according to one of Claims 1 to 3, **characterized in that** the laser power effective for the cutting is varied by means of a preprogrammed control system, or **in that** the laser power used for the cutting is varied as a function of values which are determined by means of a sensor during the cutting and which concern the thicknesses and the materials of the different material layers to be cut.

5. Method according to one of Claims 1 to 4, **characterized in that** the at least two material layers (14) comprise at least one layer chosen from the group of polymer layer (17), hydrophobic layer (18), adhesive layer, fabric layer (17), metal-coated polymer layer, metal layer, and layer (17) meltable by the laser radiation.

6. Method according to one of Claims 1 to 5, **characterized in that**, during the cutting of the multi-layer analysis element (10) or of the constituent part of the multi-layer analysis element (10) by means of laser radiation in the at least two areas (20, 21, 22), all or some of the material layers (14) of the analysis element blank (1) are cut through.

7. Method according to one of Claims 1 to 6, **characterized in that** the multi-layer analysis element (10) is a test strip with a test field for the electrochemical or photometric analysis of a liquid sample and is detached, by means of the laser radiation, from an analysis element blank (1) present in the form of a tape of test strips.

8. Method according to one of Claims 1 to 6, **characterized in that** the multi-layer analysis element (10) is an analysis tape (11) with a multiplicity of test fields (6) spaced apart from one another in the tape direction (12), in which case the analysis element blank (1) is prefabricated in the form of a test label tape (5) composed at least of a detection film (2, 16) and of an adhesive tape (15), and self-adhesive test labels (7) each containing a test field (6) are in each case cut out from the test label tape (5) by means of the laser radiation and are used as the constituent parts of the analysis tape (11).

9. Method according to Claim 8, **characterized in that** the test labels (7) are transferred onto a transport tape, and the analysis tape (11) is cut out from the transport tape, provided with the test labels (7), by longitudinal cuts formed by means of laser radiation.

10. Multi-layer analysis element (10) for liquid samples, with at least two material layers (14), containing at least one test field (6) for the analysis of the liquid samples, **characterized in that** the analysis element (10) has cut edges (19) which extend through at least two areas (20, 21, 22) with different material layers (14) and which have been generated by laser radiation with a laser power adapted to the thicknesses and materials of the areas (20, 21, 22) and effective for said cutting, and during the cutting of the multi-layer analysis element (10) or of the constituent part of the multi-layer analysis element (10) by means of laser raditation from the analysis element blank (1) along a cut edge (19, 23), at least one material layer being melted by the laser radiation, such that it has a rounding effect on the cut edge (19, 23).

11. Multi-layer analysis element according to Claim 10, **characterized in that** the analysis element (10) is an analysis tape (11) with a multiplicity of test fields (6) spaced apart from one another in the tape direction (12), where the test fields (6) are arranged on self-adhesive test labels (7) which comprise at least a detection film (2, 16) and an adhesive tape (15) and which are affixed to a transport tape (8), the test labels (7) having cut edges (19) which extend through areas (20, 22) with the adhesive tape (15) and through areas (21) with the detection film (16) and the adhesive tape (15) and which have been generated by cutting with laser radiation with a laser power adapted to the thicknesses and materials of the cut material layers (14) in the areas (20, 21, 22) and effective for said cutting.

12. Multi-layer analysis element according to Claim 11, **characterized in that**, along longitudinal margins, the support tape (8) has longitudinal cut edges (24) that have been generated by laser radiation.

## Revendications

1. Procédé de fabrication d'un élément d'analyse (10) multicouche pour échantillons liquides,
l'élément présentant au moins un champ de test (6) destiné à analyser les échantillons liquides,
une ébauche (1) d'élément d'analyse constituée d'au moins deux couches (14) de matière disposées l'une au-dessus de l'autre étant préparée et l'élément d'analyse (10) multicouche ou un composant de l'élément d'analyse (10) multicouche étant découpés dans l'ébauche (1) d'élément d'analyse à l'aide d'un rayonnement laser,
le rayonnement laser découpant des différentes couches (14) de matière à découper en au moins deux zones (20, 21, 22),
le rayonnement laser traversant une zone (21) dotée d'un film de détection (2, 16),
le rayonnement laser présentant une puissance laser apte à assurer la découpe et qui est modifiée en fonction de l'épaisseur et du matériau des différentes couches (14) de matière à découper dans les zones (20, 21, 22),
au moins une couche de matière étant fondue dans l'ébauche (1) d'élément d'analyse par le rayonnement laser le long d'un bord de coupe (19, 23) lors de la découpe de l'élément d'analyse (10) multicouche ou du composant de l'élément d'analyse (10) multicouche au moyen du rayonnement laser, de manière à obtenir un effet d'arrondissement du bord de coupe (19, 23).

2. Procédé selon la revendication 1, **caractérisé en ce que** les deux ou plusieurs couches (14) de matière superposées les unes au-dessus des autres sont reliées les unes aux autres pour obtenir l'ébauche d'élément d'analyse.

3. Procédé selon l'une des revendications 1 ou 2, **caractérisé en ce que** la puissance laser apte à assurer la découpe est modifiée par au moins un procédé sélectionné dans l'ensemble constitué :
- d'une variation de la puissance laser délivrée par un laser par commande du laser ou par un élément externe de modification de puissance,
- d'une variation du diamètre du faisceau laser utilisé pour la découpe,
- d'une variation de la vitesse du déplacement relatif entre le faisceau laser et l'ébauche (1) d'élément d'analyse à découper et
- d'une variation de la position du foyer du faisceau laser par rapport à l'ébauche d'élément d'analyse.

4. Procédé selon l'une des revendications 1 à 3, **caractérisé en ce que** la puissance laser apte à assurer la découpe est modifiée au moyen d'une commande préalablement programmée ou **en ce que** la puissance laser apte à assurer la découpe est modifiée en fonction de valeurs associées à l'épaisseur et au matériau des différentes couches de matière à découper, ces valeurs étant déterminées pendant la découpe au moyen d'un détecteur.

5. Procédé selon l'une des revendications 1 à 4, **caractérisé en ce que** les deux ou plusieurs couches (14) de matière comprennent au moins une couche sélectionnée dans l'ensemble des couches polymères (17), des couches hydrophobes (18), des couches adhésives, des couches textiles (17), des couches polymères revêtues de métal, des couches métalliques et des couches (17) aptes à être fondues par le rayonnement laser.

6. Procédé selon l'une des revendications 1 à 5, **caractérisé en ce que** la totalité ou une partie des couches (14) de matière de l'ébauche (1) d'élément d'analyse sont traversées dans les deux ou plusieurs zones (20, 21, 22) lors de la découpe de l'élément d'analyse (10) multicouche ou du composant de l'élément d'analyse (10) multicouche au moyen du rayonnement laser.

7. Procédé selon l'une des revendications 1 à 6, **caractérisé en ce que** l'élément d'analyse (10) multicouche est un ruban de test qui présente un champ de test destiné à assurer une analyse électrochimique ou photométrique d'un échantillon liquide et est découpé au moyen du rayonnement laser dans une ébauche (1) d'élément d'analyse qui présente la forme d'une bande de rubans de test.

8. Procédé selon l'une des revendications 1 à 6, **caractérisé en ce que** l'élément d'analyse (10) multicouche est une bande d'analyse (11) qui présente plusieurs champs de test (6) disposés à distance les uns des autres dans la direction (12) de la bande, l'ébauche (1) d'élément d'analyse qui présente la forme d'une bande (5) d'étiquettes de test étant préfabriquée au moins à partir d'un film de détection (2, 16) et d'un ruban adhésif (15) et des étiquettes autocollantes de test (7) qui contiennent chacune un champ de test (6) sont découpées au moyen du rayonnement laser dans une bande (5) d'étiquette de test et sont utilisées comme composants de la bande d'analyse (11).

9. Procédé selon la revendication 8, **caractérisé en ce que** les étiquettes de test (7) sont transférées sur une bande de support et **en ce que** la bande d'analyse (11) est découpée longitudinalement au moyen du rayonnement laser dans la bande de support dotée des étiquettes de test (7).

10. Elément d'analyse (10) multicouche pour échantillons liquides, qui présente au moins deux couches (14) de matière et qui contient au moins un champ de test (6) pour analyse des échantillons liquides,
**caractérisé en ce que**
l'élément d'analyse (10) présente des bords de coupe (19) qui traversent au moins deux zones (20, 21, 22) dotées de couches (14) de matières différentes et qui ont été formés par un rayonnement laser dont la puissance effective de coupe est adaptée à l'épaisseur et au matériau des zones (20, 21, 22),
au moins une couche de matière étant fondue par le rayonnement laser lors de la découpe de l'élément d'analyse (10) multicouche ou du composant de l'élément d'analyse (10) multicouche au moyen du rayonnement laser dans l'ébauche (1) d'élément d'analyse le long d'un bord de coupe (19, 23) de manière à obtenir un effet d'arrondissement du bord de coupe (19, 23).

11. Elément d'analyse multicouche selon la revendication 10, **caractérisé en ce que** l'élément d'analyse (10) est une bande d'analyse (11) qui présente plusieurs champs de test (6) disposés à distance les uns des autres dans la direction (12) de la bande, les champs de test (6) étant disposés sur des étiquettes autocollantes de test (7) qui comportent au moins un film de détection (2, 16) et un ruban adhésif (15) et qui sont placées sur une bande de support (8), les étiquettes de test (7) présentant des bords de coupe (19) qui s'étendent dans des zones (20, 22) qui présentent la bande adhésive (15) et dans des zones (21) qui présentent le film de détection (16) et le ruban adhésif (15) et qui ont été formées par découpe à l'aide d'un rayonnement laser dont la puissance effective de coupe est adaptée à l'épaisseur et au matériau des couches (14) de matière découpées dans les zones (20, 21, 22).

12. Elément d'analyse multicouche selon la revendication 11, **caractérisé en ce que** la bande de support (8) présente sur des bords longitudinaux des bords de coupe longitudinaux (24) qui ont été formés par le rayonnement laser.
